# EUROPÄISCHE PATENTSCHRIFT

(11) **EP 1 613 984 B1**
(45) Veröffentlichungstag und Bekanntmachung des Hinweises auf die Patenterteilung: **14.05.2008**
(21) Anmeldenummer: 04722157.7
(22) Anmeldetag: 20.03.2004
(51) Int. Cl.: G02B 1/04

(54) **LICHTLEITENDES MATERIAL UND DESSEN VERWENDUNG**
FIBER OPTIC MATERIAL AND THE USE THEREOF
MATIERE GUIDANT LA LUMIERE ET SON UTILISATION

(30) Priorität: 10.04.2003 DE 10316414
(43) Veröffentlichungstag der Anmeldung: 11.01.2006
(73) Patentinhaber: Forschungszentrum Karlsruhe GmbH, 76133 Karlsruhe (DE)
(72) Erfinder: HANEMANN, Thomas, 76297 Stutensee (DE); BÖHM, Johannes, 76646 Bruchsal (DE); HAUSSELT, Jürgen, 76726 Germersheim (DE)
(86) Internationale Anmeldenummer: PCT/EP2004/002949
(87) Internationale Veröffentlichungsnummer: WO 2004/090583

(56) Entgegenhaltungen:
- WO-A-03/012500
- US-A- 5 308 986
- US-A- 5 606 638
- PATENT ABSTRACTS OF JAPAN Bd. 0082, Nr. 08 (P-302), 21. September 1984 (1984-09-21) & JP 59 090805 A (NIHON ITA GLASS KK), 25. Mai 1984 (1984-05-25) & DATABASE WPI Derwent Publications Ltd., London, GB; AN 1984-167731
- ADVANCED MATERIALS FOR OPTICS AND ELECTRONICS, Bd. 10, 2000, Seiten 3-7, XP002288581

## Beschreibung

Die Erfindung betrifft die Verwendung eines lichtleitenden Materials, das ein Polymer und mindestens eine hierin eingebrachte organische Verbindung enthält, zur Einstellung des optischen Brechungsindex eines Kerns eines Lichtwellenleiters.

Ein Lichtwellenleiter besteht im Wesentlichen aus einem Kern aus einem lichtleitenden Material und einen ihn umgebenden Mantel. Dabei wird als Folge der Totalreflexion an der Grenzschicht zwischen Kern und Mantel Licht durch den Lichtwellenleiter geleitet. Totalreflexion tritt auf, solange der Brechungsindex des Kerns größer als der des Mantels ist. Zum Betrieb des Lichtwellenleiters wird auf der einen Seite des Lichtwellenleiters Licht in das darin befindliche lichtleitende Material eingekoppelt; auf der anderen Seite wird das durch das lichtleitende Material transmittierte Licht aus dem Lichtwellenleiter ausgekoppelt.

Herkömmliche Lichtwellenleiter bestehen aus Quarzglas oder aus Kunststoff (Polymer), deren Brechungsindizes Werte von 1,46 bzw. 1,50 aufweisen. Der Vorteil von Lichtwellenleitern aus Polymeren gegenüber solchen aus Glasfasern liegt neben den geringeren Herstellungskosten vor allem in der Biegefähigkeit der Polymer-Lichtwellenleiters.

Lichtwellenleiter können mit einer Reihe von bekannten Verfahren hergestellt werden. Beispielsweise ist aus der DE 41 24 176 A1 sowie aus M. Jöhnck, *Polyacrylate und Polylactone für Anwendungen in einmodigen, integriert optischen, passiven Wellenleitern,* Dissertation, Universität Dortmund, 2000, bekannt, dass sich Polymer-Lichtwellenleiter aus acrylatbasierten Polymeren herstellen lassen, wobei sich der Brechungsindex des Lichtwellenleiters aus der chemischen Synthese ergibt und damit für ein bestimmtes Material festliegt. Um den Brechungsindex zu variieren, muss ein neues Polymer verwendet werden, dessen Synthese im Allgemeinen sehr aufwändig ist.

Generell ist es wünschenswert, den Brechungsindex des Kerns durch Zugabe eines geeigneten Materials zu erhöhen, um Totalreflexion über einen weiten Bereich zu erreichen. Vor allem in der Mikrooptik werden Polymere mit möglichst hohem Brechungsindex benötigt, um die Verluste (Fresnel-Verluste) beim Einkoppeln des Lichts in den Lichtwellenleiter zu verringern.

In W. Pfleging, J. Böhm, E. Gaganidze, Th. Hanemann, R. Heidinger, K. Litfin, Direct laser-assisted processing of polymers for microfluidic and micro-optical applications, Proc. SPIE Vol. 4977: Photon Processing in Microelectronics and Photonics II in Laser Applications in Microelectronics and Optoelectronic Manufacturing VIII, Photonics West Conference, 2003, wird hierzu vorgeschlagen, den Brechungsindex im Kern des Lichtwellenleiters dadurch zu erhöhen, dass nanoskalige anorganische keramische Füllstoffe in das flüssige Polymer eingebracht werden. Durch Optimierung der Dispersion dieser Füllstoffe lässt sich der Brechungsindex des Kerns leicht erhöhen bzw. absenken. Mit dem Dispergieren der Füllstoffe in das Reaktionsharz verschlechtern sich allerdings die Eigenschaften des Lichtwellenleiters signifikant: Mit steigendem Keramikanteil erhöht sich die Viskosität des Reaktionsharzes derart, dass die weitere Verarbeitung wie das Befüllen einer grabenartigen Struktur auf einem Substrat stark erschwert oder völlig unmöglich wird. Zusätzlich nimmt die optische Transmission durch den Lichtwellenleiter stark ab, d.h. die Dämpfung stark zu, was den Anwendungsbereich für derartige Lichtwellenleiter erheblich einschränkt.

Alternativ können transparente organische Füllstoffe in das flüssige Polymer eingebracht werden. Die DE 37 10 889 A1 offenbart Polymere, darunter Polymethylmethacrylat (PMMA), die nach Einlagerung von Komponenten mit dem Strukturelement eines Pyrrolo[1.2-b]azins als nichtlineare optische Materialien geeignet sind. Aus der EP 0 615 141 A1 sind Polymere wie z. B. PMMA als lichtleitendes Material bekannt, in die nicht-polymerisierende Komponenten wie Phthalsäureester oder Benzoesäureester zur Erzielung höherer Transparenz und zur Variation des Brechungsindex eingebracht wurden. Nachteilig hieran ist eine Absenkung des Glaspunkts im Polymer und somit eine etwas geringere Temperaturbeständigkeit. Die mechanische Belastbarkeit wird ebenfalls etwas geringer.

Die US 5 606 638 A offenbart eine optische Faser mit einem szintillierenden Kern. Der Kern besteht aus einer Polymermatrix und einer polyzyklischen aromatischen Verbindung wie z.B. Phenanthren, Triphenylen, Naphthalin oder Fluoranthen.

Die WO 2003/012500 A1 beschreibt eine optische Faser mit einem Kern aus einer Polymermatix wie z.B. PMMA und einem optisch aktiven Verstärker, bestehend aus einem Selten-Erd-Atom als Zentralatom und einer kondensierten heterozyklischen aromatischen Verbindung wie z.B. Phenanthrolin.

Aus der JP 59090805 A ist ein Abschwächer für eine optische Faser bekannt, der aus einer Polymermatrix und einem darin dispergierten Additiv wie z.B. Anthrazen, Pyren oder Phenanthren besteht.

Davon ausgehend ist es die Aufgabe der Erfindung, die Verwendung eines lichtleitenden Materials, das ein Polymer und mindestens eine hierin eingebrachte organische Verbindung enthält, zur Einstellung des optischen Brechungsindex eines Kerns eines Lichtwellenleiters, anzugeben, das die genannten Nachteile und Einschränkungen nicht aufweist und insbesondere bei unverringerter Transmission und Viskosität einen einfach festzulegenden Brechungsindex besitzt.

Diese Aufgabe wird durch die Merkmale des Anspruchs 1 gelöst. Die Unteransprüche beschreiben vorteilhafte Ausgestaltungen der Erfindung.

Ein zur erfindungsgemäßen Verwendung vorgesehenes lichtleitendes Material basiert auf einem transparenten organischen Feststoff, der mindestens ein Polymer oder auch eine Mischung aus Polymeren und Monomeren enthält. Bevorzugt lassen sich hierfür Polymere wie Polymethylmethacrylat (PMMA) oder Polyester bzw. Monomere wie Methylmethacrylat (MMA) einsetzen.

Die vorteilhaften Eigenschaften des zur erfindungsgemäßen Verwendung vorgesehenen lichtleitenden Materials werden dadurch erzielt, dass elektronenreiche organische Verbindungen in den zunächst ungefüllten organischen Feststoff (Polymer) eingebracht werden. Die Füllgrade reichen hierbei im Allgemeinen von 0-30 Prozent, können aber auch Werte bis zu 50% und darüber. Hierfür geeignete organische Verbindungen sind kondensierte aromatische Ringsysteme, worunter isozyklische Systeme aus mehr als einem Kohlenstoffring, deren einzelne Kohlenstoffringe gemeinsame Kohlenstoffatome aufweisen, verstanden werden. Hierzu gehören z. B. Phenanthren, Fluoren, Benz[a]anthrazen, Triphenylen, Anthrazen, 2,3-Benzanthrazen oder 11H-Benzo[b]fluoren.

In einer alternativen Ausgestaltung werden in den kondensierten aromatischen Ringsystemen Kohlenstoffatome, die nur zu einem einzigen Kohlenstoffring gehören, durch Heteroatome ersetzt. Beispiele hierfür sind Benzo[h]chinolin, Phenantroline oder Phenanthridin, in denen das Heteroatom ein Stickstoff-Atom ist.

In einer bevorzugten Ausgestaltung werden kondensierte aromatische Ringsysteme eingesetzt, die drei Ringe aufweisen wie zum Beispiel Phenanthren, Fluoren, Benzo[h]chinolin, Phenantroline oder Phenanthridin. Ebenfalls geeignet sind kondensierte aromatische Ringsysteme mit vier Ringen wie zum Beispiel Benzanthrazene, 11H-Benzo[b]fluoren oder Triphenylen.

Besonders bevorzugt sind hierbei Ringsysteme, in denen die Ringe angular angeordnet sind. Die Definition von *angular* ergibt sich aus dem Unterschied zwischen Anthrazen und Phenanthren: Während in Anthrazen die drei Kohlenstoffringe in einer Linie liegen, bilden die Verbindungslinien der Mittelpunkte der Ringe im hierzu isomeren Phenanthren einen Winkel. Besonders bevorzugte Verbindungen mit angular angeordneten Kohlenstoffringen sind die isozyklischen Phenanthren, Fluoren und Benz[a]anthrazen. Der Grund für die besondere Eignung dieser Substanzklasse dürfte in der Ausbildung eines von Null verschiedenen Dipolmoments aufgrund der Anordnung der Kohlenstoff- bzw. Heteroatome liegen. Als Resultat zeigt sich eine besonders deutliche Erhöhung des Brechungsindex im lichtleitenden Material.

In einer alternativen Ausgestaltung werden heterozyklische kondensierte aromatische Ringsysteme eingesetzt, in denen jedes Heteroatom eindeutig einem Ring zugeordnet ist. Hierzu gehören insbesondere Benzo[h]chinolin, 1,10-Phenanthrolin, Phenanthridin und 1,7-Phenantrolin. Auch in dieser Substanzklasse weisen die Verbindungen ein von Null verschiedenes Dipolmoment auf, und es liegt eine deutliche Erhöhung des Brechungsindex im lichtleitenden Material vor.

In einer weiteren Ausgestaltung werden kondensierte aromatische Ringsysteme eingesetzt, die aus zwei Ringen bestehen und die Stickstoff- und/oder Sauerstoff-Atome als Heteroatome aufweisen. Beispiele hierfür sind 1,2-Benzioxazol und Benzofuran, die ebenfalls ein von Null verschiedenes Dipolmoment aufweisen und den Brechungsindex im lichtleitenden Material erhöhen.

Das beschriebene Material findet erfindungsgemäß Verwendung als Kern von Lichtwellenleitern. In einer bevorzugten Ausführung liegen hierzu die Kerne der Lichtwellenleiter auf einem Substrat in Form einer gefüllten Grabenstruktur mit einer hierauf aufgebrachten Deckschicht vor. Erfindungsgemäß dient das Material zur Einstellung des optischen Brechungsindex des Kerns eines Lichtwellenleiter für eine Wellenlänge im Bereich von 200 nm bis 2000 nm, insbesondere von 300 nm bis 1900 nm.

Das zur erfindungsgemäßen Verwendung vorgesehene lichtleitende Material wird hergestellt, indem zunächst ein aushärtbares organisches Material bereitgestellt wird, in dem eine oder mehrere der genannten organischen Verbindungen gelöst werden. Abschließend wird das aushärtbare organische Material zusammen mit der oder den hierin gelösten organischen Verbindungen zu einem transparenten organischen Festkörper ausgehärtet. Als aushärtbares organisches Material wird bevorzugt eine Mischung aus einem Monomer und einem Polymer gewählt, die zusätzlich einen Photostarter zur Beschleunigung des lichtinduzierten Aushärtens (Polymerisation) sowie ein Trennmittel enthalten kann.

Die organische Verbindung wird vorzugsweise mittels einer Hochleistungsrühreinheit in das aushärtbare organische Material eingerührt und anschließend bevorzugt mit Ultraschall beaufschlagt.

Hierzu wird die vorliegende klare Flüssigkeit unter Lichtinduktion in einigen Minuten ausgehärtet oder direkt in vorgefertigte Gräben gefüllt. In einer alternativen Ausgestaltung werden zum Beispiel mittels einer Spritzgießanlage optische Mikrobauteile wie mikrooptische Bänke, Mach-Zehnder-Interferometer oder optische Komponenten wie Richtkoppler, Y-Koppler und andere abgeformt. In einer weiteren Ausgestaltung kann über das so genannte 2-Komponenten-Spritzgiessen der mit den organischen Substanzen gefüllte polymere Wellenleiter in einem Arbeitsgang hergestellt werden.

Das Aushärten erfolgt entweder mittels Licht, das eine Wellenlänge im Bereich von 200 nm bis 1000 nm, besonders bevorzugt von 300 nm bis 800 nm, besitzt, bzw. über die Zufuhr von Wärme.

Die zur erfindungsgemäßen Verwendung vorgesehenen organischen Verbindungen lösen sich bevorzugt in niedrig viskosen Reaktionsharzen bis zu einer Konzentration von 30% und verändern den Brechungsindex des ausgehärteten Reaktionsharzes zum Teil signifikant, während dessen optische Transmission nahezu unbeeinflusst bleibt.

Mit der vorliegenden Erfindung wird eine neue Klasse von gefüllten Polymer-Lichtwellenleitern vorgeschlagen. Diese weist insbesondere die folgenden Vorteile auf:
- Der Brechungsindex von Kernen von Lichtwellenleitern lässt sich einfach variieren, insbesondere erhöhen.
- Die optischen Eigenschaften des ungefüllten Polymers, vor allem dessen Transmission und Viskosität, bleiben erhalten.
- Die Viskosität kann gegenüber unbehandelten Systemen sogar noch abgesenkt werden, was die Verarbeitbarkeit positiv beeinflusst.
- Bessere Ankopplung an andere lichtführende Bauteile mit hohem Brechungsindex.
- Einfache und kostengünstige Herstellung.

Die Erfindung wird im Folgenden anhand von Ausführungsbeispielen näher erläutert.

Gemäß Tabelle 1 wird jeweils in einen flüssigen Ansatz, der ein Polymer, gegebenenfalls ein Monomer, ein Trennmittel und einen Photostarter enthält, eine zur erfindungsgemäßen Verwendung vorgesehene organische Verbindung gegeben. Das Volumen des Ansatzes beträgt zwischen 10 ml und 250 ml. Mit einer Hochleistungsrühreinheit wird dieser Ansatz für 1 bis 5 Minuten bei einer Drehzahl von 10000 bis 25000 U/min gerührt und dann für weitere 5 Minuten in ein Ultraschallbad gestellt. Die anschließend vorliegende klare Flüssigkeit wird dann als Plättchen 2 cm x 6 cm mit einer Dicke von 1 mm unter Lichtinduktion in einigen Minuten ausgehärtet oder direkt in vorgefertigte Gräben gefüllt.

Weiterhin kann Tabelle 1 der maximale Füllgrad der eingesetzten organischen Verbindung im genannten Polymer, die Transmission ohne Streulicht bei 1550 nm und, soweit bestimmt, der erzielte Brechungsindex bei 633 nm des lichtleitenden Materials als Kern eines Lichtwellenleiters entnommen werden.

**Tabelle 1**

| Nr. | Flüssiger Ansatz | Organische | Struktur | Maximaler | Transmission | Brechungsindex |
|---|---|---|---|---|---|---|
| | | Verbindung | | Füllgrad | (1550nm) | (633nm) |
| 1 | PMMA, MMA, Trennmittel, Photostarter im Gewichtsverhältnis 78:20:1:1 | Phenanthren | 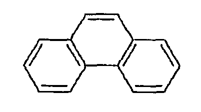 | 30% | 85%-90% | 1,537 |
| 1a | Polyester, Trennmittel, Photostarter im Gewichtsverhältnis 98:1:1 | Phenanthren | 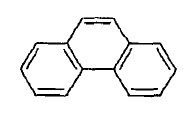 | 20% | 85%-90% | 1,591 |
| 2 | PMMA, MMA, Trennmittel, Photostarter im Gewichtsverhältnis 78:20:1:1 | Fluoren | 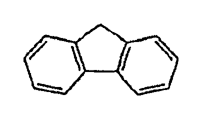 | 20% | 85%-90% | 1,518 |
| 2a | Polyester, Trennmittel, Photostarter im Gewichtsverhältnis 98:1:1 | Fluoren | 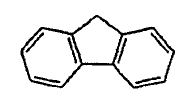 | 20% | 85%-90% | 1,587 |
| 3 | PMMA, MMA, Trennmittel, Photostarter im Gewichtsverhältnis 78:20:1:1 | genzo[h]chinolin | 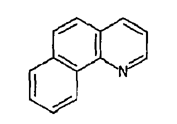 | 30% | 85%-90% | 1,547 |
| 4 | PMMA, MMA, Trennmittel, Photostarter im Gewichtsverhältnis 78:20:1:1 | 1,10-Phenanthrolin | 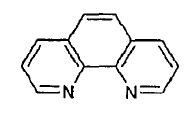 | 10% | 85%-90% | 1,507 |
| 5 | PMMA, MMA, Trennmittel, Photostarter im Gewichtsverhältnis 78:20:1:1 | Phenanthridin | 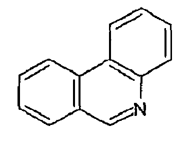 | 10% | 85%-90% | 1,506 |
| 6 | PMMA, MMA, Trennmittel, Photostarter im Gewichtsverhältnis 78:20:1:1 | 1,7-Phenanthrolin | 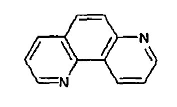 | 5% | 85%-90% | 1,503 |
| 7 | PMMA, MMA, Trennmittel, Photostarter im Gewichtsverhältnis 78:20:1:1 | genz[a]anthrazen | 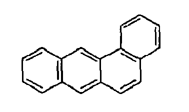 | 5% | 70% | 1,502 |
| 8 | PMMA, MMA, Trennmittel, Photostarter im Gewichtsverhältnis 78:20:1:1 | 1,2-Benzioxazol | 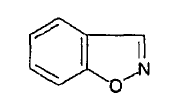 | 10% | <70% | 1,504 |
| 9 | PMMA, MMA, Trennmittel, Photostarter im Gewichtsverhältnis 78:20:1:1 | Benzofuran | 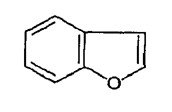 | 10% | <60% | 1,500 |
| 10 | PMMA, MMA, Trennmittel, Photostarter im Gewichtsverhältnis 78:20:1:1 | Triphenylen | 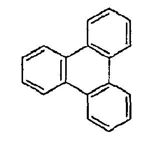 | 2,50% | <50% | 1,499 |
| 11 | PMMA, MMA, Trennmittel, Photostarter im Gewichtsverhältnis 78:20:1:1 | Anthrazen | 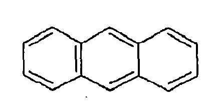 | 2% | <50% | 1,493 |
| 12 | PMMA, MMA, Trennmittel, Photostarter im Gewichtsverhältnis 78:20:1:1 | 2,3-Benzanthrazen | 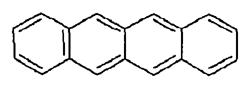 | 5% | <30% | / |
| 13 | PMMA, MMA, Trennmittel, im Photostarter im Gewichtsverhältnis 78:20:1:1 | 11H-Benzo[b]fluoren | 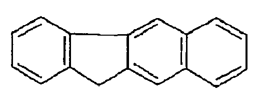 | 5% | <30% | / |
| 14 | PMMA, MMA, Trennmittel, Photostarter im Gewichtsverhältnis 78:20:1:1 | Phenazin | 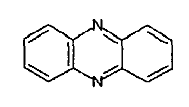 | 1% | <10% | / |
| 15 | PMMA, MMA, Trennmittel, Photostarter im Gewichtsverhältnis 78:20:1:1 | Benzanthron | 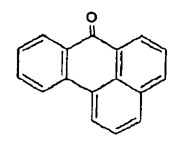 | 2% | <10% | / |
| 16 | PMMA, MMA, Trennmittel, Photostarter im Gewichtsverhältnis 78:20:1:1 | 2,4,6-Tri-(2-Pyridyl)-1,3,5-triazin | 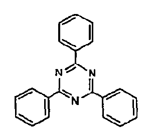 | 5% | <10% | 1,491 |
| 17 | PMMA, MMA, Trennmittel, Photostarter im Gewichtsverhältnis 78:20:1:1 | 2,4,6-Triphenyl-1,3,5-Triazin | 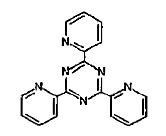 | 5% | <10% | / |
| 18 | PMMA, MMA, Trennmittel, Photostarter im Gewichtsverhältnis 78:20:1:1 | Triptyzen | 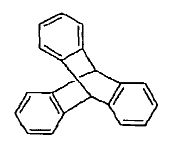 | 10% | <10% | / |
| 19 | PMMA, MMA, Trennmittel, Photostarter im Gewichtsverhältnis 78:20:1:1 | 2,1-Benzisoxazol (Anthranil) | 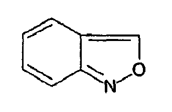 | 1% | <10% | / |

## Patentansprüche

1. Verwendung eines lichtleitenden Materials, das ein Polymer und mindestens eine hierin eingebrachte organische Verbindung enthält, wobei die organische Verbindung ein kondensiertes aromatisches Ringsystem darstellt, das zwei oder mehr aromatische Ringe aufweist, die isozyklisch oder heterozyklisch sind, wobei im Falle eines heterozyklischen Ringes jedes Heteroatom genau einem Ring zugeordnet ist, zur Einstellung des optischen Brechungsindex eines Kerns eines Lichtwellenleiters für eine Wellenlänge im Bereich von 200 nm bis 2000 nm.

2. Verwendung des lichtleitenden Materials nach Anspruch 1, **dadurch gekennzeichnet, dass** das kondensierte aromatische Ringsystem drei oder mehr Ringe aufweist.

3. Verwendung des lichtleitenden Materials nach Anspruch 2, **dadurch gekennzeichnet, dass** die Ringe des kondensierten aromatischen Ringsystems angular angeordnet sind.

4. Verwendung des lichtleitenden Materials nach einem der Ansprüche 1 bis 3, **dadurch gekennzeichnet, dass** mindestens ein Heteroatom Stickstoff ist.

5. Verwendung des lichtleitenden Materials nach einem der Ansprüche 1 bis 3, **dadurch gekennzeichnet, dass** das kondensierte aromatische Ringsystem Phenanthren, Fluoren, Benz[a]anthrazen oder Triphenylen ist.

6. Verwendung des lichtleitenden Materials nach einem der Ansprüche 1 bis 4, **dadurch gekennzeichnet, dass** das kondensierte aromatische Ringsystem Benzo[h]chinolin, 1,10-Phenanthrolin, Phenanthridin oder 1,7-Phenantrolin ist.

7. Verwendung des lichtleitenden Materials nach Anspruch 1, **dadurch gekennzeichnet, dass** das kondensierte aromatische Ringsystem 1,2-Benzioxazol oder Benzofuran ist.

8. Verwendung des lichtleitenden Materials nach einem der Ansprüche 1 bis 2, **dadurch gekennzeichnet, dass** das kondensierte aromatische Ringsystem Anthrazen, 2,3-Benzanthrazen oder 11H-Benzo[b]fluoren ist.

9. Verwendung des lichtleitenden Materials gemäß einem der Ansprüche 1 bis 8, **dadurch gekennzeichnet, dass** der Kern des Lichtwellenleiters auf einem Substrat in Form einer gefüllten Grabenstruktur mit einer hierauf aufgebrachten Deckschicht vorliegt.

10. Verwendung des lichtleitenden Materials gemäß einem der Ansprüche 1 bis 9 zur Einstellung des optischen Brechungsindex des Kerns eines Lichtwellenleiters für eine Wellenlänge im Bereich von 300 nm bis 1900 nm.

## Claims

1. Use of a fibre optic material which contains a polymer and at least one organic compound introduced herein, the organic compound representing a condensed aromatic ring system which has two or more aromatic rings which are isocyclic or heterocyclic, each heteroatom being assigned precisely to one ring in the case of a heterocyclic ring in order to adjust the optical refractive index of a core of an optical waveguide for a wavelength in the range of 200 nm to 2000 nm.

2. Use of the fibre optic material according to claim 1, **characterised in that** the condensed aromatic ring system has three or more rings.

3. Use of the fibre optic material according to claim 2, **characterised in that** the rings of the condensed aromatic ring system are disposed angularly.

4. Use of the fibre optic material according to one of the claims 1 to 3, **characterised in that** at least one heteroatom is nitrogen.

5. Use of the fibre optic material according to one of the claims 1 to 3, **characterised in that** the condensed aromatic ring system is phenanthrene, fluorene, benz[a]anthracene or triphenylene.

6. Use of the fibre optic material according to one of the claims 1 to 4, **characterised in that** the condensed aromatic ring system is benzo[h]quinoline, 1,10-phenanthroline, phenanthridine or 1,7-phenantroline.

7. Use of the fibre optic material according to claim 1, **characterised in that** the condensed aromatic ring system is 1,2-benzioxazole or benzofuran.

8. Use of the fibre optic material according to one of the claims 1 to 2, **characterised in that** the condensed aromatic ring system is anthracene, 2,3-benzanthracene or 11H-benzo[b]fluorene.

9. Use of the fibre optic material according to one of the claims 1 to 8, **characterised in that** the core of the optical waveguide is present on a substrate in the form of a filled trough structure with a cover layer applied hereon.

10. Use of the fibre optic material according to one of the claims 1 to 9, for adjusting the optical refractive index of the core of an optical waveguide for a wavelength in the range of 300 nm to 1900 nm.

## Revendications

1. Utilisation d'un matériau conduisant la lumière contenant un polymère et au moins un composé organique incorporé dans celui-ci, le composé organique représentant un système cyclique aromatique condensé qui présente au moins deux cycles aromatiques isocycliques ou hétérocycliques, chaque hétéroatome étant associé précisément à un cycle dans le cas d'un cycle hétérocyclique afin d'ajuster l'indice de réfraction optique du coeur d'une fibre optique pour une longueur d'onde de l'ordre de 200 à 2000 nm.

2. Utilisation du matériau conduisant la lumière selon la revendication 1,
**caractérisée en ce que**
le système cyclique aromatique condensé présente au moins trois cycles.

3. Utilisation du matériau conduisant la lumière selon la revendication 2,
**caractérisée en ce que**
les cycles du système cyclique aromatique condensé sont à arrangement angulaire.

4. Utilisation du matériau conduisant la lumière selon l'une des revendications 1 à 3,
**caractérisée en ce qu'**
au moins un hétéroatome est de l'azote.

5. Utilisation du matériau conduisant la lumière selon l'une des revendications 1 à 3,
**caractérisée en ce que**
le système cyclique aromatique condensé est du phénanthrène, du fluorène, du benzo(a)anthracène ou du triphénylène.

6. Utilisation du matériau conduisant la lumière selon l'une des revendications 1 à 4,
**caractérisée en ce que**
le système cyclique aromatique condensé est de la benzo(h)quinoline, de la 1,10-phénanthroline, de la phénanthridine ou de la 1,7-phénanthroline.

7. Utilisation du matériau conduisant la lumière selon la revendication 1,
**caractérisée en ce que**
le système cyclique aromatique condensé est de la 1,2-benzoxazolone ou du benzofurane.

8. Utilisation du matériau conduisant la lumière selon l'une des revendications 1 à 2,
**caractérisée en ce que**
le système cyclique aromatique condensé est de l'anthracène, du 2,3-benzanthracène ou du 11H-benzo(b)fluorène.

9. Utilisation du matériau conduisant la lumière selon l'une des revendications 1 à 8,
**caractérisée en ce que**
le coeur de la fibre optique se trouve sur un substrat en forme de structure en creux remplie avec une couche de recouvrement placée pardessus.

10. Utilisation du matériau conduisant la lumière selon l'une des revendications 1 à 9,
pour ajuster l'indice de réfraction optique du coeur d'une fibre optique pour une longueur d'onde dans le domaine de 300 nm à 1900 nm.
